# EUROPEAN PATENT APPLICATION

(11) **EP 4 478 178 A1**
(43) Date of publication of application: **18.12.2024**
(21) Application number: 24182379.8
(22) Date of filing: 14.06.2024
(51) Int. Cl.: G06F 8/30, G06F 8/656

(54) **SYSTEM AND METHOD FOR MANAGING UPDATING OF ARTIFACTS ASSOCIATED WITH AN APPLICATION**

(30) Priority: 16.06.2023 IN 202331041173
(71) Applicant: Siemens Industry Software Inc., Plano, TX 75024 (US)
(72) Inventor: MAHAJAN, Ria, 416008 Kolhapur, Maharashtra (IN); PAUL, Subhajit, 741247 Nadia, West Bengal (IN); CEVASCO, Fabio, 16129 Genova (IT)
(74) Representative: Patentanwaltskanzlei WILHELM & BECK

(57) **Abstract**

A system (200) and method for updating of artifacts in a live production environment of an application is disclosed. The system (200) comprises a database server (216), and an application server (100, 202) wherein the application is hosted, configured to provide a code editor interface, on a user device (212) for enabling a user to update at least one artifact definition associated with at least one artifact associated with the application, wherein the updated artifact definition is stored on the database server (216). The application server (100, 202) retrieves the updated artifact definition from the database server (216) upon being notified of the user updates to the artifact definition, by the user device (212). The application server (100, 202) furthers renders an updated artifact based on the updated artifact definition within the live production environment of the application in real-time, on the user device (212).

## Description

### FIELD OF INVENTION

The present invention relates to application management, and more particularly relates to a method and system for updating artifacts associated with an application in a live production environment.

### BACKGROUND

A key feature of any "Low code platform" that enables users to create and modify declarative artifacts or user interface (UI) view content through simple drag-and-drop operations is the ability to instantly preview a newly created or modified artifact in a live production environment. While users can modify artifacts locally, the instant preview of these changes in the live production environment presents a significant technical challenge. Recompiling and redeploying the entire application along with the modified artifacts is not feasible due to the considerable time and downtime (re-deploy) it would require, which would impact all other users.

Instantly rendering the artifact into the live production application involves two primary technical hurdles: dynamically creating an artifact on the client side (browser) from code in string format and replacing an existing artifact with a newly created one in the live production application. These challenges have been addressed in web development environments where developers' code changes are reflected after a delay in the application using the standard Hot Module Replacement (HMR) technology and a development server that tracks changes and triggers an incremental in-memory build of the application. However, the issue of replacing an artifact in the live production environment of the web application remains unresolved. Therefore, there is a need for a mechanism that overcomes these issues.

Typically, instantly rendering the artifact into the live production application involves two primary technical hurdles: dynamically creating an artifact on the client side (browser) from code in string format and replacing an existing artifact with a newly created one in the live production application. In a web development environment, developers' code changes are reflected after a delay in the application using the standard HMR technology and a development server that tracks changes and triggers an incremental in-memory build of the application.

However, the HMR technology is not suitable for rendering the artifact into the live production application as it would necessitate a constantly running development server to preview the changes, which is not ideal for a multi-user environment. Additionally, the development server demands substantial resources when running. Moreover, the changes are not reflected instantaneously in the live production application, and even a minor change takes a few seconds to be reflected in complex applications. Development servers also rely on web sockets to trigger application reloads on the client end, adding to the complexity. Furthermore, a failure of the development server requires user notification and re-launching, which is time-consuming. Therefore, there is a need for a method and system for updating artifacts in an application in a live production environment.

### SUMMARY

A system and method for updating of artifacts associated with a web application in a live production environment disclosed.

In an embodiment, a system for updating of artifacts associated with a web application in a live production environment includes a database server and an application server. The database server is configured to store one or more versions of one or more artifacts associated with the application. The application server wherein the application is hosted, is configured to provide a code editor interface, on a user device communicatively coupled to the application server, for enabling a user to update at least one artifact definition associated with at least one artifact associated with the application. In an embodiment, the user device is configured to enable a user to access the code editor interface for updating the at least one artifact definition associated with the application, wherein the updated artifact definition is stored in a database server; and publish an event notification to the application server upon detecting user updates to the artifact definition. In an embodiment, the code editor interface enables the user to update the artifact definition using a low code programming language. In an embodiment, the user updates are detected based on local storage of the updated artifact definition in the user device. In a further embodiment, a wrapper component associated with the artifact is subscribed to the event notification.

The application server is further configured to retrieve the updated artifact definition from the database server upon being notified of the user updates to the artifact definition, by the user device. In an embodiment, wherein in retrieving the updated artifact definition from the database server upon being notified of the user updates to the artifact definition, the application server is configured to use a graph query language to query a graph database wherein the updated artifact definition is stored, of the database server; and retrieve the updated artifact definition from the database server based on the querying of the graph database.

The application server is further configured to compile the updated artifact definition to generate a corresponding updated artifact suitable for rendering in the live production environment of the application. In an embodiment, in rendering the updated artifact within the live production environment of the application in real-time, on the user device, the application server is configured to replace the current version of the artifact as stored on the application server (100, 202) with the updated artifact; and update a user interface of the user device to reflect the updated artifact stored on the application server, within the application. The application server is further configured to render the updated artifact within the live production environment of the application in real-time, on the user device.

In another embodiment of the present invention, a method for updating of artifacts in a live production environment of an application includes providing, by a processing unit, a code editor interface for enabling a user to update at least one artifact definition associated with at least one artifact associated with the application on a user device, wherein the updated artifact definition is stored on a database server. In an embodiment, the user device is configured to enable a user to access the code editor interface for updating the at least one artifact definition associated with the application, wherein the updated artifact definition is stored in a database server; and publish an event notification to the application server upon detecting user updates to the artifact definition. In an embodiment, the code editor interface enables the user to update the artifact definition using a low code programming language. In an embodiment, the user updates are detected based on local storage of the updated artifact definition in the user device. In a further embodiment, a wrapper component associated with the artifact is subscribed to the event notification.

The method further includes retrieving the updated artifact definition from the database server upon being notified of the user updates to the artifact definition, by the user device. In an embodiment, retrieving the updated artifact definition from the database server upon being notified of the user updates to the artifact definition includes using a graph query language to query a graph database wherein the updated artifact definition is stored, of the database server; and retrieving the updated artifact definition from the database server based on the querying of the graph database.

The method further includes compiling the updated artifact definition to generate a corresponding updated artifact suitable for rendering in the live production environment of the application. The method further includes rendering the updated artifact within the live production environment of the application in real-time, on the user device. In an embodiment, rendering the updated artifact within the live production environment of the application in real-time, on the user device includes replacing the current version of the artifact as stored on the application server with the updated artifact; and updating a user interface of the user device to reflect the updated artifact stored on the application server, within the application.

### DETAILED DESCRIPTION

The present disclosure relates to a method and system for managing updating of artifacts associated with an application in a live production environment. Various embodiments are described with reference to the drawings, where like reference numerals are used in reference to the drawings. Like reference numerals are used to refer to like elements throughout. In the following description, numerous specific details are set forth in order to provide a thorough understanding of embodiments. These specific details need not be employed to practice embodiments. In other instances, well known materials or methods have not been described in detail in order to avoid unnecessarily obscuring embodiments. While the disclosure is susceptible to various modifications and alternative forms, specific embodiments thereof are shown by way of example in the drawings and will herein be described in detail. There is no intent to limit the disclosure to the particular forms disclosed. Instead, the disclosure is to cover all modifications, equivalents, and alternatives falling within the spirit and scope of the present disclosure.

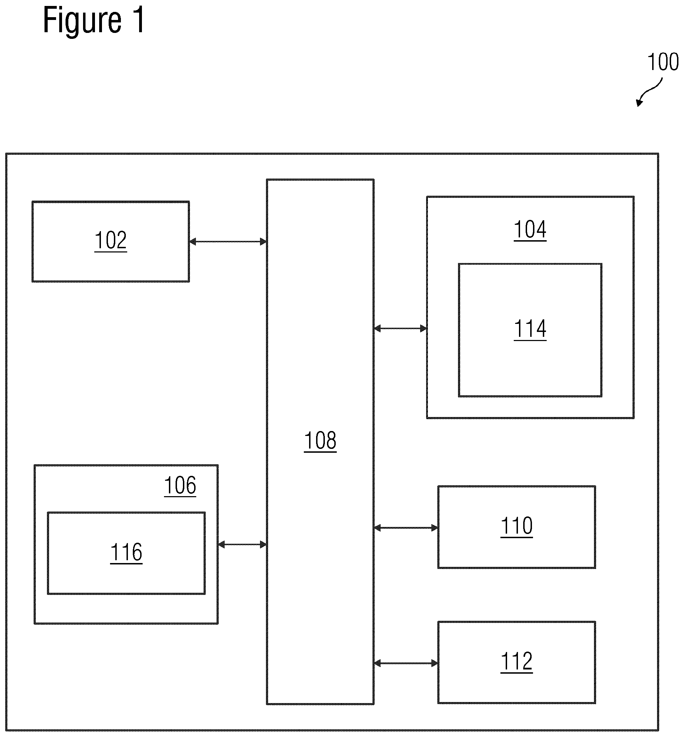

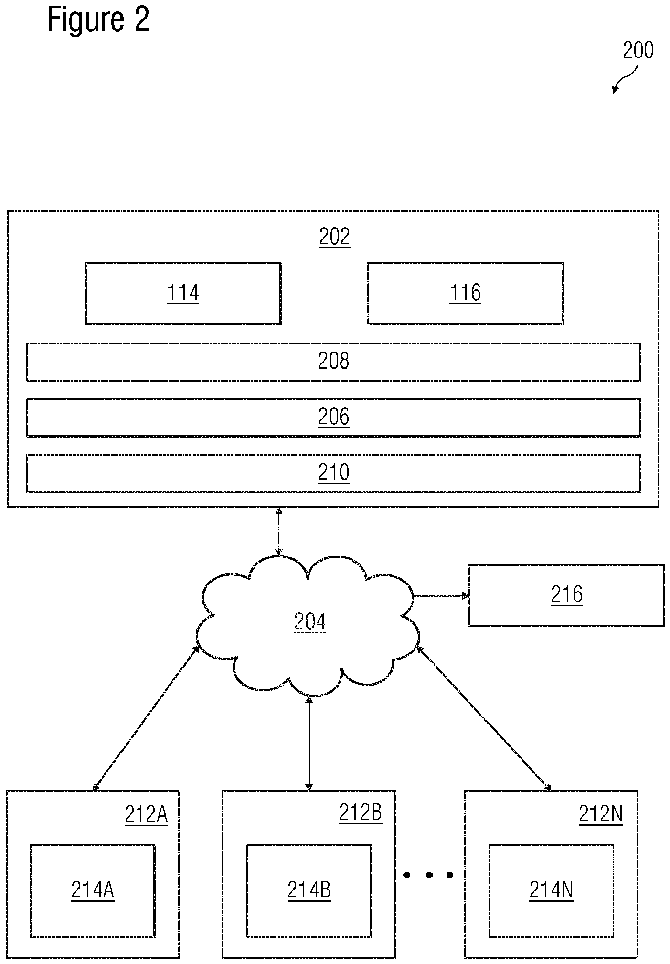

Figure 1 is a block diagram of an exemplary application server 100 for managing updating of artifacts associated with an application in a live production environment, according to one embodiment of the present invention. The live production environment refers to a live version of the application with which a user may interact with. The user may access the live production environment via a user device communicatively coupled to the application server 100 via a network, as explained later with reference to Figure 2.

The application server 100 may be a personal computer, workstation, laptop computer, tablet computer, and the like. In Figure 1, the application server 100 includes a processing unit 102, a memory unit 104, a storage unit 106, a bus 108, an input unit 110, and a display unit 112.

The processing unit 102, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 102 may also include embedded controllers, such as generic or programmable logic devices or arrays, application specific integrated circuits, single-chip computers, and the like.

The memory unit 104 may be non-transitory volatile memory and non-volatile memory. The memory unit 104 may be coupled for communication with the processing unit 102, such as being a computer-readable storage medium. The processing unit 102 may execute instructions and/or code stored in the memory unit 104. A variety of computer-readable instructions may be stored in and accessed from the memory unit 104. The memory unit 104 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory unit 104 includes a live swap module 114 stored in the form of machine-readable instructions on any of the above-mentioned storage media and may be in communication to and executed by the processing unit 102. The live swap module 114 causes the processing unit 102 to manage updating of artifacts associated with the application in a live production environment. In particular, the live swap module 114 manages updating of artifacts associated with the application, by providing, by a processing unit, a code editor interface for enabling a user to update at least one artifact definition associated with at least one artifact associated with the application, on the user device. Further, the updated artifact definition is retrieved from a database server upon being notified of the user updates to the artifact definition, by the user device. The updated artifact definition is further compiled to generate a corresponding updated artifact (for example, a web component) suitable for rendering in the live production environment of the application. The updated artifact is further rendered within the live production environment of the application in real-time, on the user device.

The storage unit 106 may be a non-transitory storage medium which stores a database 116. The database 116 stores application data such as artifacts, wrapper components corresponding to the artifacts etc., associated with the application. The input unit 110 may include input devices such as keypad, touch-sensitive display, camera (such as a camera receiving gesture-based inputs), etc., which enable an operator to provide inputs associated with managing the application. The display unit 112 may be a device with a user interface for displaying options associated with managing application data associated with the application. The bus 108 acts as interconnect between the processing unit 102, the memory unit 104, the storage unit 106, the input unit 110, and the display unit 112.

Those of ordinary skilled in the art will appreciate that the hardware components depicted in Figure 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

The application server 100 in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a response.

Figure 2 is a schematic representation of a system 200 for managing updating of artifacts associated with an application in a live production environment, according to another embodiment of the present invention. Particularly, the system 200 includes an application server 202 (similar to application server 100) communicatively coupled to a plurality of user devices 212A-N over a network. Each of the user devices 212A-N is connected to the application server 202 via a network 204 (e.g., Local Area Network (LAN), Wide Area Network (WAN), Wi-Fi, etc.).

The application server 202 includes the live swap module 114 and the database 116. The application server 202 may also include a processing unit (not shown), a memory unit (not shown), and a storage unit (not shown). The live swap module 114 may be stored on the memory unit in the form of machine-readable instructions and executable by the processing unit. The database 116 may be stored in the storage unit. The application server 202 may also include a communication interface for enabling communication with user devices 212A-N via the network 204. The system 200 further comprises a database server 216 communicatively coupled to the application server 202 and the user devices 212A-N. The database server 216 is configured to store one or more versions of one or more artifacts associated with the application. In an embodiment, the database server 216 is a (Declarative ARtifact Service) DARSI server.

The application server 202 includes a cloud communication interface 206, cloud computing hardware and OS 208, a cloud computing platform 210, the live swap module 114, and the database 116. The cloud communication interface 206 enables communication between the cloud computing platform 210, and user devices 212A-N such as smart phone, tablet, computer, etc. via a network 204.

The cloud computing hardware and OS 208 may include one or more servers on which an operating system (OS) is installed and includes one or more processing units, one or more storage devices for storing data, and other peripherals required for providing cloud computing functionality. The cloud computing platform 210 is a platform which implements functionalities such as data storage, data analysis, data visualization, data communication on the cloud hardware and OS 208 via APIs and algorithm; and delivers the aforementioned cloud services using cloud-based applications. The cloud computing platform 210 employs the live swap module 114 for managing updating of artifacts associated with a application in a live production environment as described in Figure 1. The cloud computing platform 210 also includes the database 116 for storing application data associated with the application such as the user sessions, user session data etc.

The user devices 212A-N (henceforth collectively referred as user device 212) include user interfaces 214A-N (henceforth collectively referred as user interface 214) that provide a code editor interface wherein the user updates one or more artifact definitions associated with the application, and a rendering of a live production environment associated with the application. Each of the user devices 212A-N may be provided with a communication interface for interfacing with the application server 202. Users of the user devices 212A-N can access the application hosted on the application server 202, and the code editor interface via the user interfaces 214AN. In an example, the application is accessible via a first browser tab, and the code editor interface is accessible via a second browser tab.

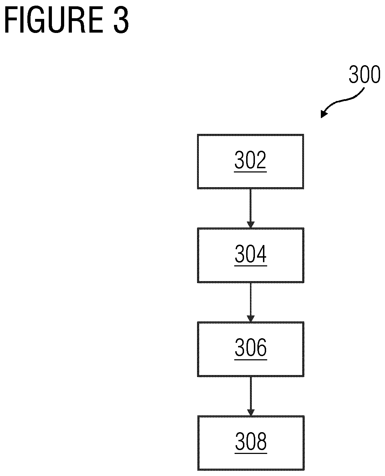

Figure 3 is a process flowchart 300 depicting an exemplary method of managing updating of artifacts associated with an application in a live production environment, in accordance with an embodiment of the present invention. It is to be understood that the system and methods described herein may be implemented in various forms of hardware, software, firmware, special purpose processing units, or a combination thereof. One or more of the present embodiments may take a form of a computer program product including program modules accessible from computer-usable or computer-readable medium storing program code for use by or in connection with one or more computers, processing units, or instruction execution system.

For the purpose of this description, a computer-usable or computer-readable medium may be any data-processing system that may contain, store, communicate, propagate, or transport the program for use by or in connection with the instruction execution system, apparatus, or device. The medium may be an electronic, magnetic, optical, electromagnetic, infrared, or semiconductor system (or system or device) or a propagation mediums in and of themselves as signal carriers are not included in the definition of physical computer-readable medium including a semiconductor or solid state memory, magnetic tape, a removable computer diskette, random access memory (RAM), a read only memory (ROM), a rigid magnetic disk, optical disk such as compact disk read-only memory (CD-ROM), compact disk read/write, and digital versatile disc (DVD) or any combination thereof. Both processing units and program code for implementing each aspect of the technology may be centralized or distributed (or a combination thereof) as known to those skilled in the art.

When an application is developed by a developer and deployed for the first time, each of the artifacts are wrapped by a wrapper component. The wrapper component is subscribed to event notifications indicative of user updates made to the respective artifiact.

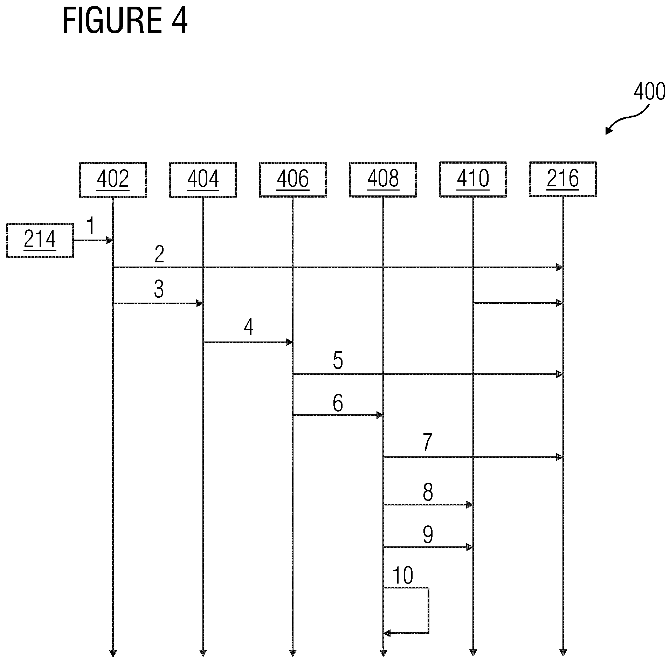

The method may begin with a user requesting access to a live production environment of the application in a first browser tab, and a code editor interface on a second browser tab. The first browser tab and the second browser tab may be opened on a single user device by a single user, or on different user devices by one or more users. It must be understood that any number of first browser tabs and second browser tabs may be kept open on one or more user devices at the same time. The method 300 is explained in conjunction with Figure 2 and the timing diagram of Figure 4 for ease of understanding. In the present embodiment, the functionality of the live swap module 114 further comprises a UI build module 402, an orchestrator service 406, one or more wrapper components 408, and an artifact compilation module 410 which enable the live swap module 114 to perform the functionalities as described earlier with respect to Figure 1. The application is called application 404 hereinafter.

At step 302, a code editor interface is provided, on the user device 212 communicatively coupled to the application server 202, for enabling a user to update update at least one artifact definition associated with at least one artifact associated with the application 404.

The user device enables a user to access the code editor interface for updating the at least one artifact definition associated with the application 404, wherein the updated artifact definition is stored in the database server 216. Further, the user device is configured to publish an event notification to the application server 202 upon detecting user updates to the artifact definition. In an embodiment, the user updates are detected based on local storage of the updated artifact definition in the user device. Referring to FIG 4, the UI build module 402 provides the user with access to the code editor on the user device 212 as part of the user interface 214. In an embodiment, the code editor interface enables the user to update the artifact definition using a low code programming language, such as a graphical programming language. The user may provide the updates, for example, in the form of strings in JSON or HTML format. As the user updates the artifact definition, he/she/they may save the updates by choosing a save option provided on the code editor interface. As the update artifact definition gets saved in the local storage of the user definition, the UI build module 402 notifies the application 404 of the updated artifact definition as shown by line 2 in Figure 400. More particularly, the application 404 is notified by publishing an event notification to the respective wrapper component 408 of the corresponding artifact. The UI build module 402 saves the updated artifact definition on the database server 216 as shown by line 2. The database server 216 stores updated artifact definitions in a hierarchical manner, in a graph database. Advantageously, the graph database helps in maintaining a chronological sequence or a version history of the updated artifact definitions.

At step 304, the updated artifact definitions are retrieved from the database server 216 upon being notified of the user updates to the one or more artifact definitions by the user device. In particular, the application 404 invokes an orchestrator service 406, as shown by line 3 in Figure 4, to communicate the user updates to the wrapper component 408 of the corresponding artifact. The orchestrator service 406 communicates the user updates to the artifact by firstly retrieving a list of identifiers associated with the updated artifact definitions stored in the DARSI server, using a graph query language, as shown by line 5 in Figure 4. The orchestrator service 406 further notifies the wrapper component 408 associated with an artifact associated with each of the updated artifact definitions retrieved from the DARSI server by firing an event notification to the wrapper component 408 as shown by line 6 in Figure 4. The wrapper component 408 further fetches the updated artifact definition from the DARSI server, based on the identifier of the artifact as shown by line 7.

At step 306, the updated artifact definition is compiled to generate corresponding updated artifact suitable for rendering in the live production environment of the application 404. In particular, the wrapper component 408 passes the updated artifact definition to the artifact compilation module 410, as shown by line 8. The updated artifact definition is, for example, in the form of strings based on JSON and/or HTML formats. In an embodiment, the artifact compilation module 410 is a react component that converts the string-based updated artifact definition into a format (i.e., the updated artifact) that is suitable for rending on a browser. The artifact compilation module 410 further returns the updated artifact to the wrapper component 408, as shown by line 9.

At step 308, the updated artifacts are rendered within the live production environment of the application 404 in real-time, on the user device. In an embodiment, rendering the updated artifact definitions within the live production environment of the application 404 in real-time, includes replacing an existing artifact stored on the application server 202 with the updated artifact generated at step 306, as indicated by the line 10 in Figure 4. More specifically, the wrapper component 408 of a current version of the artifact as stored on the application server 202, replaces the current version artifact with the updated artifact. Further, the user interface of the user device 212 is updated based on the updated artifact stored on the application server 202.

Advantageously, the present invention enables a user of an application to make changes to artifacts/web components of the application in real-time from a browser with rendering of the changes in a live production environment of the application that may be viewed from another browser in real-time. In addition, the present invention facilitates use of low-code programming language to make the changes to the artifact definitions. Further, the present invention eliminates the need for a development server and/pr web sockets that are required to trigger application reloads on the client end.

While the present disclosure has been described in detail with reference to certain embodiments, the present disclosure is not limited to those embodiments. In view of the present disclosure, many modifications and variations would present themselves, to those skilled in the art without departing from the scope of the various embodiments of the present disclosure, as described herein.

### Bezugszeichenliste / List of Reference

- 100: application server configured for managing updating of artifacts associated with an application in a live production environment
- 102: processing unit
- 104: memory unit
- 106: storage unit
- 108: bus
- 110: input unit
- 112: display unit
- 114: live swap module
- 116: database
- 200: system for managing updating of artifacts associated with an application in a live production environment
- 202: application server
- 204: network
- 206: cloud communication interface
- 208: cloud computing hardware and OS
- 210: cloud computing platform
- 212A-N: user devices
- 214A-N: user interfaces
- 216: database server
- 402: UI build module
- 404: application
- 406: orchestrator service
- 408: wrapper component
- 410: artifact compilation module

## Claims

1. A system (200) for enabling updating of artifacts in a live production environment of an application (404), the system (200) comprising:
- a database server (216) configured to store one or more versions of one or more artifacts associated with the application (404);
- an application server (100, 202), communicatively coupled to the database server (216) and wherein the application (404) is hosted, configured to:
• provide a code editor interface, on a user device (212) communicatively coupled to the application server (100, 202), for enabling a user to update at least one artifact definition associated with at least one artifact associated with the application (404), wherein the updated artifact definition is stored on the database server (216);
• retrieve the updated artifact definition from the database server (216) upon being notified of the user updates to the artifact definition, by the user device (212);
• compile the updated artifact definition to generate a corresponding updated artifact suitable for rendering in the live production environment of the application (404); and
• render the updated artifact within the live production environment of the application (404) in real-time, on the user device (212).

2. The system according to claim 1, wherein the user device (212) is configured to:
• enable a user to access the code editor interface for updating the at least one artifact definition associated with the application (404), wherein the updated artifact definition is stored in a database server (216); and
• publish an event notification to the application server (100, 202) upon detecting user updates to the artifact definition.

3. The system according to claim 1, wherein the code editor interface enables the user to update the artifact definition using a low code programming language.

4. The system according to claim 2, wherein the user updates are detected based on local storage of the updated artifact definition in the user device (212).

5. The system according to claim 4, wherein a wrapper component (408) associated with the artifact is subscribed to the event notification.

6. The system according to claim 1, wherein in retrieving the updated artifact definition from the database server (216) upon being notified of the user updates to the artifact definition, the application server (100, 202) is configured to:
• use a graph query language to query a graph database wherein the updated artifact definition is stored, of the database server (216); and
• retrieve the updated artifact definition from the database server (216) based on the querying of the graph database.

7. The system according to claim 1, wherein in rendering the updated artifact within the live production environment of the application (404) in real-time, on the user device (212), the application server (100, 202) is configured to:
• replace the current version of the artifact as stored on the application server (100, 202) with the updated artifact; and
• update a user interface (214) of the user device (212) to reflect the updated artifact stored on the application server (100, 202), within the application (404).

8. A method (300) for updating of artifacts in a live production environment of an application (404), the method comprising:
• providing, by a processing unit (102), a code editor interface for enabling a user to update at least one artifact definition associated with at least one artifact associated with the application (404), on a user device (212), wherein the updated artifact definition is stored on a database server (216);
• retrieving the updated artifact definition from the database server (216) upon being notified of the user updates to the artifact definition, by the user device (212);
• compiling the updated artifact definition to generate a corresponding updated artifact suitable for rendering in the live production environment of the application (404); and
• rendering the updated artifact within the live production environment of the application (404) in real-time, on the user device (212).

9. The method according to claim 8, wherein the user device (212) is configured to:
• enabling a user to access the code editor interface for updating the at least one artifact definition associated with the application (404), wherein the updated artifact definition is stored in the database server (216); and
• publishing an event notification to the application server (100, 202) upon detecting user updates to the artifact definition.

10. The method according to claim 8, wherein the code editor interface enables the user to update the artifact definition using a low code programming language.

11. The method according to claim 9, wherein the user updates are detected based on local storage of the updated artifact definition in the user device (212).

12. The method according to claim 11, wherein a wrapper component (408) associated with the artifact is subscribed to the event notification.

13. The method according to claim 11, wherein retrieving the updated artifact definition from the database server (216) upon being notified of the user updates to the artifact definition, comprises:
• using a graph query language to query a graph database, wherein the updated artifact definition is stored, of the database server (216); and
• retrieving the updated artifact definition from the database server (216) based on the querying of the graph database.

14. The method according to claim 8, wherein rendering the updated artifact within the live production environment of the application (404) in real-time, on the user device (212), comprises:
• replacing the current version of the artifact as stored on the application server (100, 202) with the updated artifact; and
• updating a user interface (214) of the user device (212) to reflect the updated artifact stored on the application server (100, 202), within the application.
